# EUROPÄISCHE PATENTANMELDUNG

(11) **EP 3 460 001 A1**
(43) Veröffentlichungstag der Anmeldung: **27.03.2019**
(21) Anmeldenummer: 18195205.2
(22) Anmeldetag: 18.09.2018
(51) Int. Cl.: C08L 53/02, C08L 51/06, C08L 23/26, C08K 3/40, C08K 7/28

(54) **THERMOPLASTISCHE ELASTOMERZUSAMMENSETZUNG AUF STYROL-BLOCKCOPOLYMER-BASIS MIT NIEDRIGER DICHTE UND GUTEN MECHANISCHEN EIGENSCHAFTEN**

(30) Priorität: 26.09.2017 DE 102017122314
(71) Anmelder: Kraiburg TPE GmbH & Co. KG, 84478 Waldkraiburg (DE)
(72) Erfinder: Vielsack, Dr. Frieder, 84478 Waldkraiburg (DE); Hetterich, Martina, 85540 Haar (DE)
(74) Vertreter: Eder Schieschke & Partner mbB

(57) **Zusammenfassung**

Die Erfindung betrifft eine thermoplastische Elastomerzusammensetzung, die ein Styrol-Blockcopolymer, ein Polyolefin, das mit einem Anhydrid einer organischen Säure funktionalisiert ist, und Glashohlkugeln umfasst, die mit einem Mittel auf Silan-Basis oberflächenbehandelt sind. Ebenso betrifft die Erfindung ein Verfahren zur Herstellung eines thermoplastischen Elastomers unter Verwendung der thermoplastischen Elastomerzusammensetzung sowie das dabei erhaltene thermoplastische Elastomer. Weiterhin betrifft die Erfindung auch diverse Verwendungen des thermoplastischen Elastomers.

## Beschreibung

Die vorliegende Erfindung betrifft eine thermoplastische Elastomerzusammensetzung, die ein Styrol-Blockcopolymer (SBC), ein Polyolefin, das mit einem Anhydrid einer organischen Säure funktionalisiert ist, und Glashohlkugeln umfasst, die mit einem Mittel auf Silan-Basis oberflächenbehandelt sind. Ebenso betrifft die Erfindung ein Verfahren zur Herstellung eines thermoplastischen Elastomers unter Verwendung der thermoplastischen Elastomerzusammensetzung sowie das dabei erhaltene thermoplastische Elastomer. Weiterhin betrifft die Erfindung auch diverse Verwendungen des thermoplastischen Elastomers, bei denen ein thermoplastisches Elastomer mit geringer Dichte und trotzdem guten mechanischen Eigenschaften benötigt wird.

Thermoplastische Elastomere werden in vielen Anwendungen oder zur Herstellung diverser Bauteile benötigt. Oft ist hier eine Reduzierung des Gewichts erwünscht, sodass die verwendeten thermoplastischen Elastomere eine niedrige Dichte aufweisen sollen. Die Erniedrigung der Dichte von thermoplastischen Elastomeren soll jedoch nicht zu Lasten der mechanischen Eigenschaften und der Verarbeitbarkeit gehen. Zudem ist es erwünscht, dass zur Herstellung eines thermoplastischen Elastomers mit niedriger Dichte keine Schäumverfahren notwendig sind, und dass sie durch Standardspritzgussverfahren verarbeitbar sind.

Bislang sind hier Herstellungsverfahren bekannt, bei denen Glassphären über ein funktionalisiertes Elastomer an die elastomere Phase eines thermoplastischen Elastomers angebunden werden. Dies erfolgt durch Einsatz von gegraftetem SBC anstelle von gegraftetem Polypropylen. Die erhaltenen thermoplastischen Elastomere haben jedoch oft keine ausreichend guten mechanischen Werte.

Zur Dichteerniedrigung von reinen thermoplastischen Zusammensetzungen sind Herstellungsverfahren bekannt, bei denen auf die Oberfläche von Glashohlkugeln zunächst eine funktionelle Gruppe aufgebracht wird, an die zur Herstellung einer isolierten Beschichtung ein Thermoplast in einem Emulsionsverfahren angekoppelt wird. Die durch das Emulsionsverfahren beschichteten Glashohlkugeln müssen anschließend getrocknet und isoliert werden, bevor sie in den Thermoplasten eingebettet werden können, für den eine Dichteerniedrigung erwünscht ist. Dieses mehrstufige Verfahren ist nicht nur verfahrenstechnisch aufwendig, sondern auch zeit- und kostenintensiv. Weiterhin sind Verfahren zur Erniedrigung der Dichte von Thermoplasten nicht ohne weiteres auf thermoplastische Elastomere übertragbar, da letztere aus mindestens zwei Phasen bestehen.

Es war deshalb die Aufgabe der vorliegenden Erfindung, ein thermoplastisches Elastomer bzw. eine Zusammensetzung bereitzustellen, die eine niedrige Dichte (vorzugsweise < 0,9 g/cm³) aufweist, und bei welchen bzw. welcher die mechanischen Werte in einem Bereich liegen, der sie für eine Vielzahl von gewünschten Anwendungen geeignet macht. Zudem sollen die thermoplastischen Elastomere bzw. Zusammensetzungen eine gute Verarbeitbarkeit, insbesondere in Standardspritzgussverfahren, aufweisen. Die thermoplastischen Elastomere sollen auch auf eine einfache, kostengünstige und schnelle Weise herstellbar sein.

Die erfindungsgemäße Aufgabe wird durch die Bereitstellung einer thermoplastischen Elastomerzusammensetzung gelöst, die ein Styrol-Blockcopolymer (SBC), ein Polyolefin, das mit einem Anhydrid einer organischen Säure funktionalisiert ist (funktionalisiertes Polyolefin), und Glashohlkugeln umfasst, die mit einem Mittel auf Silan-Basis oberflächenbehandelt sind (silanisierte Glashohlkugeln). Ebenso wird die erfindungsgemäße Aufgabe auch durch ein thermoplastisches Elastomer gelöst, das aus der erfindungsgemäßen thermoplastischen Elastomerzusammensetzung herstellbar ist. Die erfindungsgemäße thermoplastische Elastomerzusammensetzung kann als einfache Mischung ihrer Komponenten zu einem thermoplastischen Elastomer verarbeitet werden. Hierfür sind keine aufwendigen Zwischenschritte oder Isolierungen von Zwischenprodukten notwendig, sondern das thermoplastische Elastomer kann in einer "Ein-Topf"-Reaktion hergestellt werden.

Gemäß der vorliegenden Anmeldung wird unter einem thermoplastischen Elastomer eines verstanden, das aus einem Polymer oder einer Polymermischung (Blend) besteht und bei seiner Gebrauchstemperatur Eigenschaften aufweist, die denen von vulkanisiertem Kautschuk ähnlich sind, das jedoch bei erhöhten Temperaturen wie ein thermoplastischer Kunststoff verarbeitet und aufbereitet werden kann. Letzteres gilt auch für die erfindungsgemäßen thermoplastischen Elastomerzusammensetzungen und erfindungsgemäßen thermoplastischen Elastomere, welche Polymermischungen darstellen.

Da die erfindungsgemäßen thermoplastischen Elastomerzusammensetzungen als elastomere Komponente ein Styrol-Blockcopolymer aufweisen, wird hierin auch von thermoplastischen Elastomerzusammensetzungen auf Styrol-Blockcopolymer-Basis (TPS) gesprochen. Gleiches gilt auch für die erfindungsgemäßen thermoplastischen Elastomere.

Es wird davon ausgegangen, dass aufgrund ihrer Bestandteile die erfindungsgemäßen thermoplastischen Elastomere bzw. Zusammensetzungen eine thermoplastische Phase und eine elastomere Phase aufweisen, wobei die elastomere Phase das SBC und die thermoplastische Phase das funktionalisierte Polyolefin umfasst. Ebenso wird davon ausgegangen, dass die silanisierten Glashohlkugeln vorzugsweise in der thermoplastischen Phase dispergiert vorliegen. Es wird angenommen, dass der Grund hierfür Wechselwirkungen zwischen den silanisierten Glashohlkugeln und dem funktionalisierten Polyolefin sind. In anderen Worten ist das Mittel auf Silan-Basis vorzugsweise eines, das Wechselwirkungen mit dem Anhydrid einer organischen Säure eingehen kann. Bei den Wechselwirkungen handelt es sich vorzugsweise um anziehende oder bindende Kräfte. Darunter fallen insbesondere Van-der-Waals-Kräfte, Wasserstoffbrückenbindungen, ionische Wechselwirkungen und chemische Bindungen. Die Ausdrücke "Mittel auf Silan-Basis" und "Kopplungsmittel auf Silan-Basis" werden in der vorliegenden Anmeldung synonym verwendet.

Insbesondere betrifft die vorliegende Erfindung auch eine Ausführungsform, in der in der erfindungsgemäßen thermoplastischen Elastomerzusammensetzung das Styrol-Blockcopolymer ein Triblockcopolymer ist, bei dem die beiden terminalen Blöcke aus Polystyrol und der mittlere Block aus einem von Polystyrol unterschiedlichen Polymer gebildet sind. Dabei ist es bevorzugt, dass der mittlere Block des Triblockcopolymers von einem Polyolefin gebildet ist. Das Styrol-Blockcopolymer ist bevorzugt eines, das aus der Gruppe ausgewählt ist, die aus SEBS, SEPS, SBS, SEEPS, SiBS, SIS, SIBS oder einer Mischung davon besteht. Weiterhin ist es bevorzugt, dass das Styrol-Blockcopolymer frei von einer Gruppe ist, die mit den Glashohlkugeln eine chemische Bindung eingehen kann, sprich nicht funktionalisiert ist. Das Styrol-Blockcopolymer ist vorzugsweise frei von einer funktionellen Gruppe, die ein Anhydrid einer organischen Carbonsäure aufweist. Das Styrol-Blockcopolymer ist vorzugsweise keines, das mit Maleinsäureanhydrid gegraftet (gepfropft) ist. Das erfindungsgemäß verwendbare Styrol-Blockcopolymer ist weiter unten genauer beschrieben.

Alternativ zu den erfindungsgemäßen thermoplastischen Elastomeren oder thermoplastischen Elastomerzusammensetzungen auf Styrol-Blockcopolymer-Basis (TPS) können auf die gleiche Weise auch thermoplastische Elastomere oder thermoplastische Zusammensetzungen hergestellt werden, die anstelle des funktionalisierten Polyolefins ein thermoplastisches Polyamidelastomer (TPA), thermoplastisches Copolyesterelastomer (TPC), thermoplastisches Urethanelastomer (TPU) oder thermoplastisches Kautschukvulkanisat (TPV) aufweisen bzw. dafür eingesetzt wird, wobei TPA, TPC, TPU und TPV ebenso als funktionalisierte thermoplastische Elastomere vorliegen, d.h. ein Gruppe aufweisen, mit der das Kopplungsmittel der silanisierten Glashohlkugeln Wechselwirkungen eingehen kann.

In einer weiteren Ausführungsform der vorliegenden Erfindung ist es bevorzugt, dass in der erfindungsgemäßen thermoplastischen Elastomerzusammensetzung die Funktionalisierung des funktionalisierten Polyolefins durch ein Anhydrid einer organischen Dicarbonsäure, vorzugsweise einer organischen 1,2-Dicarbonsäure, erfolgt.

Das Anhydrid einer organischen Carbonsäure ist vorzugsweise über eine kovalente Bindung an das Polyolefin gebunden und wird durch Pfropfung hergestellt. Dazu wird ein Anhydrid einer organischen Carbonsäure auf ein geeignetes Polyolefin "aufgepfropft" (Grafting-Prozess). Hierfür wird vorzugsweise ein Anhydrid einer organischen Säure verwendet, das eine reaktive Doppelbindung aufweist, beispielsweise Maleinsäureanhydrid. Weitere Details über das Polyolefin, das mit einem Anhydrid einer organischen Carbonsäure funktionalisiert ist, sowie zur Herstellung durch Pfropfung sind weiter unten beschrieben.

In einer weiteren Ausführungsform der vorliegenden Erfindung ist das funktionalisierte Polyolefin in der erfindungsgemäßen thermoplastischen Zusammensetzung vorzugsweise ein Polypropylen. Ganz besonders bevorzugt ist das funktionalisierte Polyolefin ein mit Maleinsäureanhydrid gegraftetes/gepfropftes Polypropylen (MAH-g-PP).

In einer weiteren Ausführungsform der vorliegenden Erfindung ist in der erfindungsgemäßen thermoplastischen Zusammensetzung das Kopplungsmittel auf Silan-Basis ein Kopplungsmittel auf Aminosilan-Basis. Das Kopplungsmittel auf Aminosilan-Basis, mit dem die Oberflächen der Glashohlkugeln behandelt sind, ist aus der Gruppe ausgewählt, die aus γ-Aminopropyltrimethoxysilan, γ-Aminopropyltriethoxysilan, N-2-(aminoethyl)-3-aminopropyltrimethoxysilan oder einer Mischung davon besteht. Die erfindungsgemäß verwendbaren silanisierten Glashohlkugeln sind ebenso weiter unten detaillierter beschrieben.

In einer weiteren Ausführungsform der vorliegenden Erfindung kann die thermoplastische Elastomerzusammensetzung zusätzlich ein Polyolefin aufweisen, das vorzugsweise nicht mit einem Anhydrid einer organischen Carbonsäure funktionalisiert ist. Vorzugsweise weist das Polyolefin also keine funktionelle Gruppe auf. Besonders bevorzugt ist das Polyolefin Polypropylen oder Polyethylen, stärker bevorzugt Polypropylen. Erfindungsgemäß verwendbare Polyolefine sind weiter unten beschrieben.

Die thermoplastische Elastomerzusammensetzung kann zudem zusätzlich einen Weichmacher enthalten. Entsprechende Weichmacher, die erfindungsgemäß eingesetzt werden können, sind ebenso weiter unten beschrieben.

Weiterhin kann die erfindungsgemäße thermoplastische Elastomerzusammensetzung auch weitere Additive, wie einen Stabilisator, einen Hilfsstoff, einen Farbstoff, einen Füllstoff und/oder einen Verträglichkeitsvermittler enthalten. Diese sind ebenso weiter unten genauer beschrieben.

Die vorliegende Erfindung betrifft auch ein Verfahren zur Herstellung eines thermoplastischen Elastomers auf Styrol-Blockcopolymer-Basis. Dabei werden vorzugsweise die Bestandteile der erfindungsgemäßen thermoplastischen Elastomerzusammensetzung bei einer Temperatur im Bereich von 150°C bis 240°C, vorzugsweise im Bereich von 180°C bis 220°C miteinander vermischt. Das erfindungsgemäße Verfahren ist weiter unten detaillierter beschrieben.

Die vorliegende Erfindung betrifft auch ein thermoplastisches Elastomer, das nach dem erfindungsgemäßen Verfahren erhältlich ist bzw. erhalten wird. Das erfindungsgemäße thermoplastische Elastomer zeichnet sich durch eine Härte im Bereich von 40 ShA bis 30 ShD, eine geringe Dichte im Bereich von 0,5 bis 1,1 g/cm³, eine Zugfestigkeit von mindestens 2,0 MPa, eine Bruchdehnung von mindestens 150 %, und einen Druckverformungsrest bei Raumtemperatur nach 72 Stunden von kleiner als 70% aus. Alle genannten (bevorzugten) Merkmale der erfindungsgemäßen Elastomerzusammensetzung sollen hierin auch für das erfindungsgemäße thermoplastische Elastomer gelten.

Die vorliegende Erfindung betrifft auch die Verwendung eines Polyolefins, das mit einem Anhydrid einer organischen Carbonsäure funktionalisiert ist, zur Herstellung einer erfindungsgemäßen thermoplastischen Elastomerzusammensetzung oder eines thermoplastischen Elastomers.

Die vorliegende Erfindung betrifft auch die Verwendung eines erfindungsgemäßen thermoplastischen Elastomers zur Herstellung eines Verbundmaterials mit einem Polyamid oder einem Polyolefin, beziehungsweise zur Haftung der erfindungsgemäßen thermoplastischen Elastomerzusammensetzung auf einem Polyamid oder einem Polyolefin. In anderen Worten betrifft die vorliegende Erfindung auch ein Verfahren zur Herstellung eines Verbundmaterials aus dem erfindungsgemäßen thermoplastischen Elastomer und einem Polyamid oder einem Polyolefin, wobei die thermoplastische Elastomerzusammensetzung mit einem Polyamid oder einem Polyolefin verbunden wird. Dabei wird bei der erfindungsgemäßen Verwendung bzw. dem erfindungsgemäßen Verfahren als Verarbeitungsmethode zur Herstellung der Artikel Spritzguss, Mehrkomponenten-Spritzguss, Spritzguss-Einlegeverfahren, Extrusion oder Formpressverfahren verwendet, wobei Spritzguss, Mehrkomponenten-Spritzguss, Spritzguss-Einlegeverfahren und Extrusion bevorzugt und Mehrkomponenten-Spritzguss ganz besonders bevorzugt sind.

Somit betrifft die vorliegende Erfindung auch ein Verbundmaterial aus einem erfindungsgemäßen thermoplastischen Elastomer und einem Polyamid oder einem Polyolefin.

Die vorliegende Erfindung betrifft auch die Verwendung eines erfindungsgemäßen thermoplastischen Elastomers als Bauteil oder Formkörper im Automobilinnen- und -außenbereich, von Industriegeräten, Industriewerkzeugen, Elektrowerkzeugen für den professionellen und/oder privaten Einsatz, Haushaltsgeräten, Produkten im Bereich der Unterhaltungselektronik, medizinischen Verbrauchsartikeln und Geräten, Sportartikeln, Behältern für Hygieneartikel und Kosmetika, Dichtungsmaterialien oder Zubereitungen von Verbrauchsgütern.

Die zuvor genannten und in den erfindungsgemäßen thermoplastischen Elastomerzusammensetzungen oder erfindungsgemäßen thermoplastischen Elastomeren sowie bei den erfindungsgemäßen Verwendungen und Verfahren eingesetzten Komponenten werden im Weiteren genauer beschrieben:
A: Styrol-Blockcopolymer
B: funktionalisiertes Polyolefin
C: silanisierte Glashohlkugeln
D: Polyolefin (nicht funktionalisiert)
E: Weichmacher
F: Stabilisator, Hilfsstoff, Farbstoff

### Komponente A: Styrol-Blockcopolymer

Unter dem Begriff "Styrol-Blockcopolymer" (SBC) wird erfindungsgemäß ein Mehrblockcopolymer verstanden, wobei mindestens einer der Blöcke Polystyrol ist. Mindestens einer der weiteren Blöcke ist üblicherweise ein Polybutadien, Polyisopren oder Polyisobuten. Das SBC kann ein Triblockcopolymer der Struktur A-B-A sein, wobei der A-Block üblicherweise Polystyrol ist und der B-Block üblicherweise aus Polybutadien, Polyisopren oder Polyisobuten aufgebaut ist (SBS, SIS, SiBS). Alternativ können im A-Block die Styrol-Monomere teilweise oder vollständig durch Derivate von Styrol, wie beispielsweise α-Methylstyrol, 2-Methylstyrol, 3-Methylstyrol, 4-Methylstyrol, 4-tert-Butylstyrol, 4-Cyclohexylstyrol oder Vinylnaphthalin wie 1-Vinylnaphthalin und 2-Vinylnaphthalin ersetzt werden. Der B-Block kann auch alternativ Mischungen von Dienen enthalten wie SIBS (B-Block aus Mischung von Butadien und Isopren). Weiterhin können SBC bestehend aus Styrol- und Dien-Monomeren auch als hydrierte Derivate zum Einsatz kommen. Dabei liegen die Einheiten der B-Blöcke teilweise oder vollständig hydriert vor. Bevorzugt seien hier Polystyrol-block-poly(ethylen-co-butylen)-block-polystyrol (SEBS), Polystyrolblock-poly(ethylen-co-propylen)-block-polystyrol (SEPS) und Polystyrol-block-poly(ethylen-co-(ethylen-propylen))-block-polystyrol (SEEPS) genannt. Neben Triblock-, können alternativ auch Di-, Tetrablock- oder Multiblockcopolymere aus genannten Monomeren von Styrol, Styrolderivaten (A-Blöcke) und Butadien, Isopren, Isobutylen und deren Mischungen (B-Blöcke) in unterschiedlicher Reihung von A- und B-Blöcken (beispielsweise B-A-B, A-B-A-B, etc.) verwendet werden. Bevorzugte SBC sind aufgebaut aus Triblockcopolymeren A-B-A.

Erfindungsgemäße SBC haben ein gewichtsgemitteltes Molgewicht (Mw) von 50.000 bis 1.000.000 g/mol, bevorzugt von 100.000 bis 500.000 g/mol.

Nicht zu verwechseln sind Blockcopolymere auf Basis von Styrol, die für Haftkleber (PSA, pressure sensitive adhesives) verwendet werden. Obwohl deren molekularer Aufbau ein sehr ähnlicher ist, weisen diese ein anderes rheologisches Verhalten als SBC auf. Haftkleber müssen unter leichtem Druck (Fingerdruck) und bei Raumtemperatur oder erhöhter Temperatur (Heißkleber) bereits Haftung zum Substrat aufbauen. Um dies zu erreichen, werden Blockcopolymere deutlich unter Mw 50.000 g/mol verwendet.

Das SBC liegt in der erfindungsgemäßen thermoplastischen Elastomerzusammensetzung bzw. im erfindungsgemäßen thermoplastischen Elastomer vorzugsweise in einer Menge im Bereich von 12 Gew.-% bis 30 Gew.-%, stärker bevorzugt in einem Bereich von 15 Gew.-% bis 25 Gew.-% und am stärksten bevorzugt in einem Bereich von 18 Gew.-% bis 23 Gew.-% vor, bezogen auf das Gesamtgewicht der thermoplastischen Elastomerzusammensetzung bzw. des thermoplastischen Elastomers.

### Komponente B: funktionalisiertes Polyolefin:

Erfindungsgemäß ist das Polyolefin mit einem Anhydrid einer organischen Säure funktionalisiert, wie es weiter oben beschrieben ist. Bevorzugt findet die Funktionalisierung mittels Pfropfung (Grafting-Prozess) statt, wobei ein Anhydrid einer organischen Säure, vorzugsweise Maleinsäureanhydrid, auf ein geeignetes Polyolefin aufgepfropft wird.

Unter einem Polyolefin werden in der vorliegenden Erfindung Polymere verstanden, die aus Alkenen wie Ethylen, Propylen, 1-Buten oder Isobuten, durch Kettenpolymerisation hergestellt werden. Dabei werden aus den ungesättigten Alkenen durch Polymersation vorzugsweise gesättigte Polymere hergestellt.

Dabei können erfindungsgemäß die Polyolefine Homopolymere, statistische Copolymere, aber auch Blockcopolymere, wie beispielsweise thermoplastische Elastomere auf Polyolefin-Blockcopolymer-Basis (TPO) sein, wobei erfindungsgemäß Homopolymere oder statistische Copolymere bevorzugt sind, die vorzugsweise aus Alkenen hergestellt werden, die vorzugsweise aliphatische Alkene sind.

Besonders bevorzugt sind die Polyolefine nicht-elastomere Polyolefine, d.h. weisen keine elastomeren Eigenschaften auf. Stärker bevorzugt sind die Polyolefine Thermoplasten.

Als Basis für die Pfropfung können handelsübliche Polyolefine eingesetzt werden, die im Folgenden beschrieben werden:
Polyolefine können beispielsweise Homopolymere oder statistische Copolymere aus Olefinen sein. Beispiele sind: Copolymere aus Polyethylen, wie HDPE (high density polyethylene), MDPE (medium density polyethylene), LDPE (low density polyethylene), LLDPE (linear low density polyethylene), VLDPE (very low density polyethylene); ein Homopolymer aus Propylen (hPP); ein statistisches Copolymer aus Propylen und Ethylen (rPP); und Kombinationen derselben.

Für die Erfindung geeignete Polyolefine, als Basis für die Funktionalisierung mit Anhydrid einer Dicarbonsäure, sind vor allem diejenigen, die sich für die Verarbeitung im Spritzguss eignen. Geeignete Polyolefine sind solche mit guten Fließeigenschaften und Steifigkeit.

Homopolymere von Propylen (hPP) sind kommerziell erhältlich und es kann jedes dieser erhältlichen hPPs erfindungsgemäß eingesetzt werden. Der Einsatz von hPP ist erfindungsgemäß bevorzugt.

Kommerziel erhältliche hPP sind beispielsweise Produkte der LyondellBasell, die unter dem Handelsnamen Moplen® erhältlich sind, wie Moplen® HP500N, Moplen® HP501L.

Statistische Polypropylen-Copolymere (rPP) sind ebenso kommerziell erhältlich und jedes dieser rPPs kann erfindungsgemäß verwendet werden. Als Comonomer ist Ethylen und/oder Buten bevorzugt.

Es können Polyethylene verschiedener Dichte wie HDPE, MDPE, LDPE, LLDPE, VLDPE erfindungsgemäß verwendet werden. Diese sind ausreichend kommerziell verfügbar.

Besonders bevorzugt ist es erfindungsgemäß jedoch, dass das Polyolefin eines ist, das Propylen in seinen Wiederholungseinheiten umfasst. Noch stärker bevorzugt ist das Polyolefin ein hPP.

Die erfindungsemäß als Polyolefine einsetzbaren TPO sind Blockcopolymere, deren Blöcke aus Olefin-Monomeren als Wiederholungseinheiten aufgebaut sind. Dabei weisen die erfindungsgemäßen TPO auf Polyolefin-Blockcopolymer-Basis mindestens zwei unterschiedliche Polymerblöcke auf. Diese Blöcke können aus einer Olefinsorte oder aus zwei oder mehreren Olefinsorten aufgebaut sein. Die zum Aufbau des erfindungsgemäßen TPOs auf Polyolefin-Blockcopolymer-Basis verwendeten Olefine sind aliphatische Olefine, wie bspw. Ethylen, Propylen oder Butylen, wobei erfindungsgemäß Ethylen und Propylen bevorzugt sind. Besonders bevorzugt sind die erfindungsgemäßen TPO auf Polyolefin-Blockcopolymer-Basis ausschließlich aus aliphatischen Olefinen als sogenannte Wiederholungseinheiten aufgebaut. Erfindungsgemäß sind von der Definition der "TPO auf Polyolefin-Blockcopolymer-Basis" solche ausgenommen, die einen aromatischen Rest aufweisen (solche sind für den Fachmann als TPS (thermoplastische Elastomere auf Styrol-Basis) bekannt). Besonders bevorzugt für die hier beschriebene Anwendung beziehungsweise die erfindungsgemäße Zusammensetzung sind TPO, deren Blöcke aus Polypropylen, Polyethylen oder einem statistischen Ethylen/Propylen-Copolymer aufgebaut sind bzw. daraus bestehen. Kommerziell erhältlich sind solche TPO beispielsweise unter dem Handelsnamen Hifax CA 10 A der Fa. LyondellBasell. Weiterhin besonders bevorzugt sind die in US 8,481,637 B2 ausführlich beschriebenen Polyolefin-Blockcopolymere (dort als "olefin block copolymers, OBC" bezeichnet) auf die hier in vollem Umfang Bezug genommen wird. Hierbei handelt es sich um Polymere, die abwechselnde Blöcke eines harten (sehr starren) und eines weichen (hochelastomeren) Segments aufweisen. Solche Produkte werden von Dow Chemicals unter dem Handelsnamen INFUSE™ vertrieben. Insbesondere sind die Typen mit Verwendungsempfehlung für TPE bevorzugt (INFUSE™ 9010, 9007, 9107, 9807).

Weitere Beispiele erfindungsgemäßer TPO auf Polyolefin-Blockcopolymer-Basis sind sogenannte hydrierte Dien-Blockcolymere. Solche Polymere weisen vorzugsweise Polymerblöcke auf, die aus hydriertem Polybutadien oder hydriertem Polyisopren bestehen.

Um aus den genannten Polyolefinen Polyolefine zu erhalten, die mit einem Anhydrid einer organischen Säure funktionalisiert sind, werden die genannten Polyolefine nach ihrer Herstellung durch Pfropfung mit einem Anhydrid einer organischen Säure versehen.

Unter Pfropfung versteht man allgemein, dass bei bereits vorgebildeten Molekülketten eines Primärpolymers (hier das Polyolefin) nachträglich andere Molekülbausteine (hier das Anhydrid der organischen Carbonsäure) darauf "aufgepfropft" werden. Man spricht bei derartig funktionalisierten Polymeren auch von "Pfropfpolymeren". Pfropfpolymere können auf verschiedene Arten hergestellt werden, z.B. nach Vermengen des Primärpolymers mit den aufzupfropfenden Molekülbausteinen in einem gewünschten Verhältnis und anschließender Radikalbildung durch Zersetzung von Peroxiden oder durch Bestrahlung, vorzugsweise Peroxide. Dabei bilden sich Radikalstellen am Primärpolymer, an die sich die aufzupfropfenden Molekülbausteine anlagern. Hierfür muss das Anhydrid der organischen Carbonsäure eine reaktive Stelle aufweisen, an der die Radikalstelle des Primärpolymers angreifen kann. Eine Pfropfung kann teilweise auch schon eintreten, wenn eine Mischung aus Primärpolymer und aufzupfropfenden Molekülbausteinen intensiv mechanisch-thermisch behandelt wird. Die Pfropfreaktion wird vorzugsweise in einem Festphasenreaktor, Walzwerk oder einem Extruder durchgeführt und ist dem Fachmann im Gebiet der Thermoplasten bekannt.

Vorzugsweise wird als Anhydrid einer organischen Carbonsäure eines verwendet, das als reaktive Stelle eine Doppelbindung aufweist. Besonders bevorzugt wird für die Pfropfung Maleinsäureanhydrid verwendet, das dann nach der Pfropfung als Bernsteinsäureanhydridrest gebunden an das Polyolefin vorliegt.

Die Menge des Maleinsäureanhydrids (eigentlich Bernstäureanhydridrest) liegt im gepfropften Polyolefin im Bereich von 0,1 Gew.-% bis 5 Gew.-%, noch stärker bevorzugt im Bereich von 0,5 Gew.-% bis 2 Gew.-%, bezogen auf das Gesamtgewicht des Polyolefins, das mit einem Anhydrid einer organischen Caronsäure funktionalisiert wird.

Erfindungsgemäß bevorzugt als Polyolefin wird Polypropylen, besonders bevorzugt hPP verwendet. Ein mit Maleinsäureanhydrid gepfropftes Polypropylen wird in der Fachwelt auch als MAH-g-PP bezeichnet. Ein solches MAH-g-PP ist unter dem Handelsnamen "Scona® TPPP" bekannt und z.B. als die Typen "Scona® TPPP 2112 GA" oder "Scona® TPPP 8112 GA" erhältlich.

In der erfindungsgemäßen thermoplastischen Elastomerzusammensetzung bzw. dem erfindungsgemäßen thermoplastischen Elastomer liegt das Gewichtsverhältnis von funktionalisiertem Polyolefin zu SBC vorzugsweise im Bereich von 15:100 bis 100:100, stärker bevorzugt im Bereich von 20:100 bis 95:100.

### Komponente C: silanisierte Glashohlkugeln

Die für die erfindungsgemäße thermoplastische Elastomerzusammensetzung oder das erfindungsgemäße thermoplastische Elastomer verwendbaren silanisierten Glashohlkugeln werden hergestellt, indem ein Kopplungsmittel auf Silan-Basis an die Oberfläche der Glashohlkugeln angebunden wird.

Die hierfür verwendeten Glashohlkugeln haben eine Glashülle und einen hohlen Kern, und können entweder mit Gas mit Atmosphärendruck oder reduziertem Druck gefüllt sein. Die Glashülle enthält als Hauptkomponente Siliziumdioxid und kann als zusätzliche Komponenten Natriumoxid, Magnesiumoxid, Kalziumoxid, Boroxid, Phosphoroxid und dergleichen enthalten.

Die Glashohlkugeln können im Wesentlichen rund sein, aber auch von dieser Form abweichen, z.B. die Form einer Ellipse aufweisen, und/oder Krater bzw. Dellen in der Oberfläche haben. Es ist bevorzugt, dass die Glashohlkugeln ein Verhältnis von kürzester Achse zu längster Achse von ≥ 0,85, stärker bevorzugt 0,90 und am stärksten bevorzugt 0,95 aufweisen.

Da während des Mischens der erfindungsgemäßen thermoplastischen Elastomerzusammensetzung hohe Scherkräfte wirken, können Glashohlkugeln brechen. Diesen Bruch gilt es durch richtige Wahl der isostatischen Bruchfestigkeit zu vermeiden. Die Glashohlkugeln weisen vorzugsweise eine isostatische Bruchfestigkeit (10 Volumen-%) (10 volume % isostatic collapse strength) von 55 MPa oder mehr, stärker bevorzugt 69 MPa oder mehr und am meisten bevorzugt 100 MPa oder mehr auf. Die "isostatische Bruchfestigkeit (10 Volumen-%)" ist gemäß der ASTM D-3102-78 definiert, wobei eine angemessene Menge der Glashohlkugeln in Glycerin eingebracht und so lange der Druck erhöht wird, bis 10 Volumen-% zerbrochen sind.

Der mittlere Durchmesser ist vorzugsweise im Bereich von 10 µm bis 70 µm, stärker bevorzugt im Bereich von 10 µm bis 35 µm. Der mittlere Durchmesser kann unter Verwendung eines kommerziell erhältlichen Laserbeugungs-Partikelgrößenmessgeräts bestimmt werden.

Die Glashohlkugeln haben vorzugsweise eine Dichte von 0,9 g/cm³ oder weniger, stärker bevorzugt 0,6 g/cm³ oder weniger, und 0,3 g/cm³ oder mehr. Es handelt sich hierbei um die tatsächliche Dichte der Glashohlkugeln und nicht um die Schüttdichte. Die tatsächliche Dichte der Glashohlkugeln wird unter Verwendung eines Pycnometers, wie beispielsweise des Typs AccuPyc II 1340 von Micromeritics bestimmt.

Die Oberflächenbehandlung der Glashohlkugeln erfolgt mit einem Kopplungsmittel auf Silan-Basis. Das Kopplungsmittel auf Silan-Basis ist eine Silan-Verbindung mit einer hydrolisierbaren Gruppe und eine hydrophoben Gruppe (organische Gruppe). Beispiele solcher Kopplungsmittel auf Silan-Basis sind im Falle der vorliegenden Erfindung vorzugsweise γ-Aminopropyltrimethoxysilan, γ-Aminopropyltriethoxysilan und N-2-(aminoethyl)-3-aminopropyltrimethoxysilan, wobei auch eines oder mehrere der Genannten zusammen eingesetzt werden können. Es ist bevorzugt, dass ein Kopplungsmittel auf Aminosilan-Basis verwendet wird, da davon ausgegangen wird, dass die Aminogruppe des Silans mit dem Anhydrid der organischen Säure des funktionalisierten Polyolefins wechselwirken bzw. chemisch reagieren kann.

Alternativ zu einem Kopplungsmittel auf Aminosilan-Basis könnten auch Kopplungsmittel auf Silan-Basis mit einer EpoxyGruppe, Hydroxy-Guppe oder Mercapto-Gruppe eingesetzt werden, wobei hier die funktionelle Gruppe des Polyolefins entsprechend anzupassen wäre, um eine Wechselwirkung oder chemische Reaktion zu ermöglichen. Komplementäre Gruppen, die als funktionelle Gruppen an der Oberfläche der Glashohlkugeln bzw. des Polyolefins sitzen können, sind die Folgenden: AminoGruppe/Anhydrid, Amino-Gruppe/Epoxy-Gruppe, HydroxyGruppe/Anhydrid, Mercapto-Gruppe/Anhydrid, HydroxyGruppe/Epoxy-Gruppe, Mercapto-Gruppe/Epoxy-Gruppe. Es ist denkbar, dass die Glashohlkugeln die eine oder die andere der komplementären Gruppen aufweisen, wobei das Polyolefin die jeweils komplementäre Gruppe dazu aufweist.

Erfindungsgemäß bevorzugt ist es, wenn die Glashohlkugeln mit einem Kopplungsmittel auf Aminosilan-Basis oberflächenbehandelt sind, und das Polyolefin mit einem Anhydrid einer organischen Säure funktionalisiert ist.

Erfindungsgemäß verwendbare silanisierte Glashohlkugeln sind von der Firma Hoffmann Mineral erhältlich. Vorzugsweise werden erfindungsgemäß Glashohlkugeln des Typs iM16K ASHM verwendet.

In der erfindungsgemäßen thermoplastischen Elastomerzusammensetzung bzw. dem erfindungsgemäßen thermoplastischen Elastomer liegt das Gewichtsverhältnis von silanisierten Glashohlkugeln zu SBC vorzugsweise im Bereich von 80:100 bis 250:100, stärker bevorzugt im Bereich von 100:100 bis 140:100.

### Komponente D: Polyolefin (nicht funktionalisiert)

Hier können die gleichen Polyolefine verwendet werden, die weiter oben für das funktionalisierte Polyolefin genannt sind, mit dem Unterschied, das kein Anhydrid einer organischen Säure auf das Polymer aufgepfropft ist.

In der erfindungsgemäßen thermoplastischen Elastomerzusammensetzung bzw. dem erfindungsgemäßen thermoplastischen Elastomer liegt das Gewichtsverhältnis von Polyolefin zu SBC vorzugsweise im Bereich von 0:100 bis 85:100, stärker bevorzugt bis zu 80:100.

Es ist zudem bevorzugt, dass das Gewichtsverhältnis der Summe an Polyolefin (nicht funktionalisiert) und funktionalisiertem Polyolefin zu SBC im Bereich von 15:100 bis 100:100 liegt.

Weiterhin ist es bevorzugt, dass das Gewichtsverhältnis von Polyolefin (nicht funktionalisiert) zu funktionalisiertem Polyolefin im Bereich von 8:23 bis 70:23 liegt, sofern ein Polyolefin (nicht funktionalisiert) überhaupt vorliegt.

### Komponente E: Weichmacher

Geeignete Weichmacher sind dem Fachmann grundsätzlich bekannt. Geeignete Weichmacher für unpolare Elastomere (z.B. SBCs) sind technische oder medizinische Mineral- oder Weißöle, native Öle, wie beispielsweise Soja- oder Rapsöl, ferner Alkylsulfonylester, insbesondere Alkylsulfonylphenylester, wobei die Alkylsubstituenten lineare und/oder verzweigte Alkylketten mit > 5C-Atomen enthalten. Ferner Di- oder Tri-Alkylester der Mellitsäure, wobei die Alkylsubstituenten vorzugsweise lineare und/oder verzweigte Alkylketten mit > 4 C-Atomen enthalten. Des Weiteren finden auch Alkylester von Di-, Tri- und höheren Polycarbonsäuren, wobei die Alkylsubstituenten vorzugsweise lineare und/oder verzweigte Alkylketten sind, als entsprechende Weichmacher Verwendung. Als Beispiele seien genannt: Adipinsäure-di-2-ethylhexylester und Tributyl-O-acetylcitrat. Weiterhin können auch Carbonsäureester von Mono- und/oder Polyalkylenglycolen als Weichmacher eingesetzt werden, wie beispielsweise Ethylenglycoladipat. Erfindungsgemäß bevorzugt werden hier technische oder medizinische Mineral- oder Weißöle eingesetzt. Genannt sei als technisches Mineralöl Shell Catenex T 145 S.

Als geeignete Weichmacher können auch Mischungen der beschriebenen Substanzklassen eingesetzt werden.

In der erfindungsgemäßen thermoplastischen Elastomerzusammensetzung bzw. dem erfindungsgemäßen thermoplastischen Elastomer liegt das Gewichtsverhältnis von Weichmacher zu SBC vorzugsweise im Bereich von 100:100 bis 300:100, stärker bevorzugt im Bereich von 150:100 bis 250:100.

### Komponente F: Stabilisatoren, Hilfsstoffe und Farbstoffe (Additive)

Geeignete Additive sind z.B. Verarbeitungshilfsstoffe, Metallseifen, Fettsäuren und Fettsäurederivate, Alterungs-, UV- oder Ozonschutzmittel wie Ozonschutzwachse, Antioxidantien,Paraffinwachse, mikrokristalline Wachse, Pigmente, Farbstoffe wie Titandioxid, Litophone, Zinkoxid, Eisenoxid, Ultramarinblau, Chromoxid, Antimonsulfit; Stabilisatoren wie Wärmestabilisatoren, Stabilisatoren gegen Bewitterung; Oxidationsschutzmittel, Gleitmittel, Entformungsmittel, Flammschutzmittel, Haftvermittler, Markierungsstoffe, Mineralien sowie Kristallisationsbeschleuniger und -verzögerer.

Als Prozesshilfsstoffe und Stabilisatoren können die folgenden verwendet werden: Antistatika, Antischäummittel, Gleitmittel, Dispergiermittel, Trennmittel, Anti-Blocking-Agentien, Radikalfänger, Antioxidantien, Biozide, Fungizide, UV-Stabilisatoren, sonstige Lichtschutzmittel, Metalldesaktivatoren, des Weiteren auch Additive wie Schäumhilfen, Treibmittel, Flammschutzmittel, Rauchgasunterdrücker, Schlagzähmodifikatoren, Haftmittel, Anti-Fogging-Mittel, Farbstoffe, Farbpigmente, Farbmasterbatches, Viskositätsmodifikatoren und Mittel zum Alterungsschutz.

In der erfindungsgemäßen thermoplastischen Elastomerzusammensetzung bzw. dem erfindungsgemäßen thermoplastischen Elastomer liegt das Gewichtsverhältnis der Summe aller Additive zu SBC vorzugsweise im Bereich von 0,1:100 bis 8:100, stärker bevorzugt im Bereich von 0,5:100 bis 5:100.

Besonders bevorzugt werden als Hilfsstoffe Stabilisatoren und Alterungsschutzmittel eingesetzt.

### Herstellung der erfindungsgemäßen Zusammensetzungen:

Die thermoplastischen Elastomerzusammensetzungen gemäß der vorliegenden Erfindung können durch Mischen der Komponenten A, B, C, D, E und F - soweit sie in den Zusammensetzungen vorliegen - hergestellt werden. Die Mischung kann dabei unter Verwendung von in der Kautschuktechnologie und Kunststofftechnologie bekannten Mischsystemen wie Knetern, Innenmischern, z. B. Innenmischern mit ineinander greifender oder tangierender Rotorgeometrie, sowie auch in kontinuierlich mischenden Anlagen wie Mischextrudern, z. B. Mischextrudern mit 2 bis 4 und mehr Wellenschnecken (z.B. Doppelschneckenextrudern), erfolgen.

Bei der Durchführung des erfindungsgemäßen Herstellungsverfahrens ist es wichtig, darauf zu achten, dass die Mischungstemperatur hoch genug ist, dass die Komponenten B und D - sofern erfindungsgemäß eingesetzt - in den plastischen Zustand überführt werden können, jedoch dabei nicht geschädigt werden. Dies wird gewährleistet, wenn eine Temperatur oberhalb der höchsten Schmelz- oder Erweichungstemperatur der Komponente B und D - sofern erfindungsgemäß eingesetzt - gewählt wird. Gleichzeitig muss auf einen adäquaten Energieeintrag geachtet werden, der über die Drehzahl und Durchsatz im Extruder bestimmt ist (siehe Beispiele).

Besonders bevorzugt wird das Mischen der Komponenten - soweit sie in den Zusammensetzungen vorliegen - bei einer Temperatur im Bereich von 150°C bis 240°C und bevorzugt 180°C bis 200°C vorgenommen.

Die in der vorliegenden Anmeldung verwendeten Begriffe "umfassen", "enthalten" und "aufweisen" sollen auch in jedem Fall, in dem sie verwendet werden, den Begriff "bestehen aus" mitumfassen, so dass diese Ausführungsformen auch in dieser Anmeldung offenbart sind.

### Beispiele:

### Bestimmungsmethoden und Definitionen:

Die Bestimmung der Dichte erfolgt gemäß DIN EN ISO 1183-1.

Die Bestimmung der Shore-Härte erfolgt gemäß DIN EN ISO 868 und DIN ISO 7619-1.

Die Bestimmung der Zugfestigkeit und Bruchdehnung erfolgt gemäß DIN 53504/ISO 37. Abweichend zur ISO 37 wird der S2 Stab mit einer Vorschubgeschwindigkeit von 200 mm/min geprüft.

Die Bestimmung des Druckverformungsrests erfolgt gemäß DIN ISO 815-1, Methode A.

Die Bestimmung des Weiterreißwiderstands erfolgt gemäß ISO 34-1.

Die Haftung der thermoplastischen Elastomerzusammensetzungen auf PA6 wird gemäß VDI2019 bestimmt: Als PA6 wird eines mit der Produktbezeichnung Frianyl B3 V2 NC1102 von Nilit Plastics verwendet. Die Haftung der thermoplastischen Elastomerzusammensetzungen auf Polypropylen (PP) (Typ: Moplen® HP501L; Hersteller: Basell Polyolefins) wird ebenso gemäß VDI2019 bestimmt.

### Extruder- und Spritzgussparameter:

Die Herstellung der thermoplastischen Elastomere der vorliegenden Erfindung erfolgt in einem kontinuierlichen Prozess auf einem Doppelschneckenextruder (48 L/D). Die Glashohlkugeln werden über eine Seitenfütterung zugegeben. Die Extruderdrehzahl liegt bei 500 U/min, der Durchsatz bei 20 kg/h. Das eingestellte Temperaturprofil verläuft von 170 bis 190°C. Das Extrudat wird granuliert für die spätere Spritzguss- oder Extrusionsverarbeitung.

Die Hersteller der Probekörper erfolgt im Spritzgussverfahren mit einem Temperaturprofil von 180 bis 200°C.

### Ausführungsbeispiele:

Tabelle 1 gibt die verwendeten Abkürzungen für die in den Beispielen und Vergleichsbeispielen eingesetzten Komponenten an:

**Tabelle 1:**

| **Komponente** | **Rohstoff** |
|---|---|
| A | SBC |
| B | Polyolefin, mit einem Anhydrid einer organischen Carbonsäure funktionalisiert |
| C | silanisierte Glashohlkugeln |
| D | Polyolefin (nicht funktionalisiert) |
| E | Weichmacher |
| F | Additive |
| G | nicht-silanisierte Glashohlkugeln |
| H | SBC, mit einem Anhydrid einer organischen Carbonsäure funktionalisiert |

### Beispiele und Vergleichsbeispiele:

Herstellung von thermoplastischen Elastomerzusammensetzungen und Elastomeren (erfindungsgemäß und nicht-erfindungsgemäß):

Es werden gemäß der oben genannten Herstellungsvariante thermoplastische Elastomere mit den aus Tabellen 2 und 3 ersichtlichen Bestandteilen hergestellt. Tabelle 4 gibt Hersteller und Typ der eingesetzten Komponenten an. In den Tabellen 5 und 6 sind die mechanischen Meßwerte und Werte hinsichtlich der Verarbeitbarkeit angegeben.

**Tabelle 2:**

| | **Eingesetzte Rohstoffe** | | |
|---|---|---|---|
| | | | |
| **Komponente** | **Rohstoff** | **Hersteller** | **Typ** |
| A | SBC | TSRC | Taipol SEBS 6151 |
| B | Polyolefin (funktionalisiert) | BYK | Scona TPPP 2112 GA |
| C | silanisierte Glashohlkugeln | Hoffmann Mineral | iM16K ASHM |
| D1 | Polyolefin (nicht funktionalisiert) | LyondellBasell | Moplen HP501L |
| D2 | | LyondellBasell | Hifax CA 10 A |
| E | Weichmacher | Shell | Shell Catenex T 145 S |
| F | Additive: | BASF | Irgafos 168 |
| | Prozessstabilisator | | |
| G | nicht-silanisierte Glashohlkugeln | 3M | iM16K |
| H | SBC (funktionalisiert) | BYK | Scona TSKD 9103* |

| | | | |
|---|---|---|---|
| *Maleinsäureanhydrid gegraftetes SEBS | | | |

**Tabelle 3:**

| | **Zusammensetzungen** | | | | | | |
|---|---|---|---|---|---|---|---|
| | | | **Vergleichsbeispiel 1** | **Vergleichsbeispiel 2** | **Beispiel 1** | **Beispiel 2** | **Vergleichsbeispiel 3** |
| Rohstoff | | Komponente | [Gewichtsanteile] | [Gewichtsanteile] | [Gewichtsanteile] | [Gewichtsanteile] | [Gewichtsanteile] |
| SBC | | A | 100 | 100 | 100 | 100 | 50 |
| Polyolefin (funktionalisiert) | | B | | | 92 | 46 | |
| silanisierte Glashohlkugeln | | C | | | 136 | 136 | 136 |
| Polyolefin (nicht funktionalisiert) | | D1 | 92 | 92 | | 46 | 92 |
| Weichmacher | | E | 200 | 200 | 200 | 200 | 200 |
| Additive: | | | | | | | |
| Prozessstabilisator | | F | 0,22 | 0,26 | 0,26 | 0,26 | 0,26 |
| nicht-silanisierte Glashohlkugeln | | G | 51 | 136 | | | |
| SBC (funktionalisiert) | | H | | | | | 50 |

| | | | | | | | |
|---|---|---|---|---|---|---|---|
| Vergleichsbeispiele 1 und 2 ohne wechselwirkende Gruppen an Polyolefin und Glashohlkugeln; Beispiele 1 und 2 mit wechselwirkenden Gruppen an Polyolefin und Glashohlkugeln; Vergleichsbeispiel 3: wechselwirkende Gruppen an SBC und Glashohlkugeln | | | | | | | |

**Tabelle 4:**

| | | **Zusammensetzungen** | | | | | |
|---|---|---|---|---|---|---|---|
| | | | | **Beispiel 3** | **Beispiel 4** | **Beispiel 5** | **Beispiel 6** |
| Rohstoff | | | Komponente | [Gewichtsanteile] | [Gewichtsanteile] | [Gewichtsanteile] | [Gewichtsanteile] |
| SBC | | | A | 100 | 100 | 100 | 100 |
| Polyolefin (funktionalisiert) | | | B | 23 | 23 | 23 | 46 |
| silanisierte Glashohlkugeln | | | C | 136 | 118 | 112 | 136 |
| Polyolefin (nicht-funktionalisiert) | | | D1 | 69 | 18 | | |
| | | | D2 | | | | 46 |
| Weichmacher | | | E | 200 | 200 | 200 | 200 |
| Additive: | | | | | | | |
| Prozessstabilisator | | | F | 0,26 | 0,23 | 0,22 | 0,26 |

| | | | | | | | |
|---|---|---|---|---|---|---|---|
| bei den Beispielen 3 bis 6 werden Härteeinstellungen über die Variation der Komponenten C und D vorgenommen; | | | | | | | |

**Tabelle 5: Vergleich zwischen thermoplastischen Elastomeren mit und ohne Anbindung an Glashohlkugeln:**

| **Mechanische Werte** | | | | | |
|---|---|---|---|---|---|
| | | **Vergleichsbeispiel 1** | **Vergleichsbeispiel 2** | **Beispiel 1** | **Beispiel 2** |
| **Wert** | **Einheit** | | | | |
| Dichte | g/cm³ | 0,802 | 0,717 | 0,723 | 0,721 |
| Härte | ShA | 72 | 78 | 87 | 89 |
| Zugfestigkeit | MPa | 4,5 | 3 | 5 | 5,1 |
| Bruchdehnung | % | 594 | 587 | 200 | 209 |
| Weiterreißwiderstand | N/mm | 17,7 | 14,5 | 20,7 | 22,1 |
| Druckverformungsrest bei 23°C/72h | % | 41 | 53 | 35 | 40 |
| Druckverformungsrest bei 70°C/24h | % | 60 | 69 | 47 | 46 |
| Druckverformungsrest bei 100°C/24h | % | 74 | 81 | 80 | 78 |

| | | | | | |
|---|---|---|---|---|---|
| Die Werte für Dichte, Härte, Zugfestigkeit, Bruchdehnung und Weiterreißwiderstand sind bei Raumtemperatur aufgenommen. | | | | | |

**Tabelle 6: Vergleich von thermoplastischen Elastomeren mit Anbindung der Glashohlkugeln über SBC-g-MAH oder PP-g-MAH:**

| **Mechanische Werte** | | | | |
|---|---|---|---|---|
| | | **Vergleichsbeispiel 3** | **Beispiel 1** | **Beispiel 2** |
| **Wert** | **Einheit** | | | |
| Dichte | g/cm³ | 0,724 | 0,723 | 0,721 |
| Härte | ShA | 84 | 87 | 89 |
| Zugfestigkeit | MPa | 2,8 | 5 | 5,1 |
| Bruchdehnung | % | 36 | 200 | 209 |
| Weiterreißwiderstand | N/mm | 16,2 | 20,7 | 22,1 |
| Druckverformungsrest bei 23°C/72h | % | 57 | 35 | 40 |
| Druckverformungsrest bei 70°C/24h | % | 82 | 47 | 46 |
| Druckverformungsrest bei 100°C/24h | % | 92 | 80 | 78 |

| | | | | |
|---|---|---|---|---|
| Die Werte für Dichte, Härte, Zugfestigkeit, Bruchdehnung und Weiterreißwiderstand sind bei Raumtemperatur aufgenommen. | | | | |

**Tabelle 7: Härteeinstellungen:**

| **Mechanische Werte** | | | | | |
|---|---|---|---|---|---|
| | | **Beispiel 3** | **Beispiel 4** | **Beispiel 5** | **Beispiel 6** |
| **Wert** | **Einheit** | | | | |
| Dichte | g/cm³ | 0,721 | 0,720 | 0,723 | 0,723 |
| Härte | ShA | 88 | 69 | 52 | 78 |
| Zugfestigkeit | MPa | 5,6 | 3,6 | 2,3 | 4 |
| Bruchdehnung | % | 220 | 302 | 328 | 223 |
| Weiterreißwiderstand | N/mm | 21,8 | 12,3 | 8,9 | 16,3 |
| Druckverformungsrest bei 23°C/72h | % | 33 | 16 | 17 | 24 |
| Druckverformungsrest bei 70°C/24h | % | 43 | 30 | 24 | 40 |
| Druckverformungsrest bei 100°C/24h | % | 89 | 80 | 71 | 76 |

| | | | | | |
|---|---|---|---|---|---|
| Die Werte für Dichte, Härte, Zugfestigkeit, Bruchdehnung und Weiterreißwiderstand sind bei Raumtemperatur aufgenommen. | | | | | |

**Tabelle 8: Haftungsergebnisse:**

| **Haftungswerte** | | | |
|---|---|---|---|
| | | **Beispiel 2** | **Beispiel 3** |
| **Wert** | **Einheit** | | |
| Haftung auf PA6 | N/mm | 4,3 (D) | 1,3 (A) |
| Haftung auf PP | N/mm | 4,5 (D) | 4,1 (D) |

## Patentansprüche

1. Thermoplastische Elastomerzusammensetzung, die ein Styrol-Blockcopolymer, ein Polyolefin, das mit einem Anhydrid einer organischen Säure funktionalisiert ist, und Glashohlkugeln umfasst, die mit einem Mittel auf Silan-Basis oberflächenbehandelt sind.

2. Thermoplastische Elastomerzusammensetzung nach Anspruch 1, worin das Styrol-Blockcopolymer ein Triblockcopolymer ist, bei dem die beiden terminalen Blöcke aus Polystyrol und der mittlere Block aus einem von Polystyrol unterschiedlichen Polymer gebildet sind.

3. Thermoplastische Elastomerzusammensetzung nach Anspruch 2, worin der mittlere Block des Triblockcopolymers von einem Polyolefin gebildet ist.

4. Thermoplastische Elastomerzusammensetzung nach einem der Ansprüche 1 bis 3, worin das Styrol-Blockcopolymer ein SEBS, SEPS, SBS, SEEPS, SIS, SiBS oder SIBS ist.

5. Thermoplastische Elastomerzusammensetzung nach einem der Ansprüche 1 bis 4, worin das Styrol-Blockcopolymer frei von einer Gruppe ist, die mit den Glashohlkugeln eine chemische Bindung eingehen kann.

6. Thermoplastische Elastomerzusammensetzung nach einem der Ansprüche 1 bis 5, worin das Anhydrid einer organischen Säure vorzugsweise ein Anhydrid einer organischen Dicarbonsäure ist, vorzugsweise einer organischen 1,2-Dicarbonsäure.

7. Thermoplastische Elastomerzusammensetzung nach einem der Ansprüche 1 bis 6, worin das Mittel auf Silan-Basis ein Mittel auf Aminosilan-Basis ist.

8. Thermoplastische Eastomerzusammensetzung nach Anspruch 7, worin das Mittel auf Aminosilan-Basis eines ist, das aus der Gruppe ausgewählt ist, die aus γ-Aminopropyltrimethoxysilan, γ-Aminopropyltriethoxysilan, N-2-(aminoethyl)-3-aminopropyltrimethoxysilan oder einer Mischung davon besteht.

9. Thermoplastische Elastomerzusammensetzung nach einem der Ansprüche 1 bis 8, die zusätzlich ein Polyolefin aufweist, das vorzugsweise nicht mit einem Anhydrid einer organischen Carbonsäure funktionalisiert ist.

10. Thermoplastische Elastomerzusammensetzung nach einem der Ansprüche 1 bis 9, die zusätzlich einen Weichmacher enthält.

11. Verfahren zur Herstellung eines thermoplastischen Elastomers, wobei die Bestandteile einer thermoplastischen Elastomerzusammensetzung gemäß einem der Ansprüche 1 bis 10 bei einer Temperatur im Bereich von 150°C bis 240°C miteinander vermischt werden.

12. Thermoplastisches Elastomer, das nach einem Verfahren gemäß Anspruch 11 erhältlich ist.

13. Verwendung eines Polyolefins, das mit einem Anhydrid einer organischen Carbonsäure funktionalisiert ist, zur Herstellung einer thermoplastischen Elastomerzusammensetzung gemäß einem der Ansprüche 1 bis 10 oder eines thermoplastischen Elastomers gemäß Anspruch 12.

14. Verwendung eines thermoplastischen Elastomers gemäß Anspruch 12 zur Herstellung eines Verbundmaterials mit einem Polyolefin oder einem Polyamid.

15. Verbundmaterial, das ein thermoplastisches Elastomer gemäß Anspruch 12 und ein Polyolefin oder ein Polyamid umfasst.

16. Verwendung eines thermoplastischen Elastomers gemäß Anspruch 12 als Bauteil oder Formkörper im Automobilinnen- und -außenbereich, von Industriegeräten, Industriewerkzeugen, Elektrowerkzeugen für den professionellen und/oder privaten Einsatz, Haushaltsgeräten, Produkten im Bereich der Unterhaltungselektronik, medizinischen Verbrauchsartikeln und Geräten, Sportartikeln, Behältern für Hygieneartikel und Kosmetika, Dichtungsmaterialien oder Zubereitungen von Verbrauchsgütern.
